# EUROPÄISCHE PATENTSCHRIFT

(11) **EP 3 135 861 B1**
(45) Veröffentlichungstag und Bekanntmachung des Hinweises auf die Patenterteilung: **07.10.2020**
(21) Anmeldenummer: 16184896.5
(22) Anmeldetag: 19.08.2016
(51) Int. Cl.: E21D 11/38, E21D 21/00, F16B 13/02, F16B 13/00

(54) **BEFESTIGUNGSVORRICHTUNG**
ATTACHMENT DEVICE
DISPOSITIF DE FIXATION

(30) Priorität: 26.08.2015 DE 102015114127
(43) Veröffentlichungstag der Anmeldung: 01.03.2017
(73) Patentinhaber: Meese, Ludwig, 51467 Bergisch Gladbach (DE)
(72) Erfinder: Meese, Ludwig, 51467 Bergisch Gladbach (DE)
(74) Vertreter: Gosdin, Carstensen & Partner Patentanwälte Partnerschaftgesellschaft mbB

(56) Entgegenhaltungen:
- EP-A1- 0 510 501
- AT-B- 354 507
- CH-A5- 600 179

## Beschreibung

Die Erfindung betrifft eine Befestigungsvorrichtung zur Verankerung eines Gegenstandes an einer festen Wandung im Ingenieur-, Tief-, Wasser- und Tunnelbau, aufweisend einen in einer Bohrung in der Wandung befestigten Befestigungsanker, wobei zwischen dem zu verankernden Gegenstand und der Wandung eine durchgehende Dichtfolie angeordnet ist, die mit einem mit der Befestigungsvorrichtung verbundenen Folienteil verbindbar ist.

Eine solche Befestigungsvorrichtung ist aus der EP 0 510 501 A1 bekannt. Diese Befestigungsvorrichtung weist einen Dübel und einen Befestigungsanker auf, wobei der Dübel aus einem Tellerabschnitt und einem davon aufrecht abstehenden Zapfenabschnitt gebildet ist. Die Außenwand des aus einem Kunststoff hergestellten Dübels ist im Bereich des Zapfenabschnitts in Form eines Grobgewindes strukturiert ausgebildet und es ist in den Zapfenabschnitt ein Sackloch eingearbeitet, in das ein Innengewinde eingearbeitet ist. An dem Tellerabschnitt des Dübels ist ein Folienteil befestigt, das mit einer Dichtfolie verbunden werden kann. In das Innengewinde kann der Befestigungsanker in Form einer Gewindestange eingeschraubt werden. Montiert wird die Befestigungsvorrichtung, indem eine Bohrung mit einem den Zapfenabschnitt des Dübels aufnehmenden großen Durchmesser in die Wandung eingearbeitet wird, anschließend der Dübel mit dem Zapfenabschnitt bis zur Anlage des Tellerabschnitts an der Wandung in die Bohrung eingesetzt wird, dann das Folienteil mit der Dichtfolie verbunden wird und abschließend die Gewindestange in das Innengewinde des Zapfenabschnitts eingeschraubt wird. An der Gewindestange kann dann ein Gegenstand befestigt, insbesondere festgeschraubt werden.

Eine weitere Befestigungsvorrichtung ist aus der CH 600 179 A5 bekannt. Diese Befestigungseinrichtung weist einen Dübel auf, an den ein Befestigungsteller angeformt ist. In den Dübel wird ein Befestigungsanker in Form eines Spreizorgans eingeschraubt. Das Spreizorgan kann eine Schraube oder eine Schraube mit einer Öse sein. Zudem kann das Spreizorgan den Befestigungsteller aufweisen, wobei dann der Dübel ohne den Befestigungsteller ausgebildet ist. Der Befestigungsteller ist zur Verbindung mit einem Flächengebilde vorgesehen. Weiterhin kann das Spreizorgan eine Sollbruchstelle aufweisen.

Aus der AT 354 507 B ist eine Befestigungsvorrichtung bekannt, die einen Befestigungsanker aufweist, der direkt in ein Bohrloch einzementiert wird. Auf diesen Befestigungsanker wird eine Scheibe aufgesetzt und festgeschraubt, wobei der äußere Rand der Scheibe mit einer Dichtfolie verklebt wird.

Der Erfindung liegt die Aufgabe zugrunde, eine Befestigungsvorrichtung zur Verankerung eines Gegenstandes an einer festen Wanderung im Ingenieur-, Tief-, Wasser- und Tunnelbau bereitzustellen, die einen einfachen Aufbau aufweist und problemlos montierbar ist.

Diese Aufgabe wird dadurch gelöst, dass der Befestigungsanker ausgehend von einem wandseitigen Ende zumindest über eine Teillänge des Befestigungsankers einen Mantel aus einem während der Herstellung auf den Befestigungsanker spritzgegossenen Kunststoffwerkstoff aufweist, dass der Mantel gegenüberliegend zu dem wandseitigen Ende eine tellerförmige Anlage aufweist und dass der Befestigungsanker einen Bolzen, einen Anlagering und ein Halteteil aufweist. Diese Ausgestaltung hat mehrere Vorteile.

Zunächst einmal ist die Herstellung der so ausgebildeten Befestigungsvorrichtung einfacher als beim Stand der Technik möglich. Beim Stand der Technik ist ein separat hergestellter Dübel notwendig, in den eine Bohrung und in diese ein Gewinde eingearbeitet werden müssen. In das Gewinde muss nach dem Einsetzen des Dübels in eine Bohrung in einer Wandung der als Gewindestange ausgebildete Befestigungsanker eingeschraubt werden. Dagegen wird bei der erfindungsgemäßen Befestigungsvorrichtung der Mantel auf dem Befestigungsanker während der Herstellung spritzgegossen oder extrudiert. Durch einen Schrumpfprozess beim Erkalten des den Mantel bildenden Kunststoffwerkstoffs legt dieser sich fest an dem Außenumfang des Befestigungsankers an, so dass eine feste Verbindung zwischen diesen beiden Bauteilen hergestellt ist. Die feste Verbindung gewährleistet zusätzlich eine hohe Ausziehsicherheit des Befestigungsankers aus dem Mantel. Diese Ausziehsicherheit beträgt mehrere Tonnen und ist über einen langen getesteten Zeitraum konstant. Demgegenüber ist Ausziehfestigkeit des in den Dübel eingeschraubten Befestigungsankers wesentlich geringer und nimmt zudem auch noch im Lauf der Zeit ab. Im Übrigen kann der Befestigungsanker vor dem Spritzgießen oder Extrudieren des Mantels geprimert werden, also mit einem Haftvermittler überzogen werden. Dadurch kann die Verbindung zwischen dem Befestigungsanker und dem Mantel nochmals verbessert werden.

In Weiterbildung der Erfindung ist das Halteteil eine Gewindestange, eine Gewindebuchse, eine ringförmige Öse oder ein sonstig ausgeformtes Bauteil. An dem so ausgebildeten Halteteil kann dann ein beliebiger Gegenstand befestigt werden.

In Weiterbildung der Erfindung erstreckt sich der Mantel mit der tellerförmigen Anlage von dem wandseitigen Ende der Befestigungsvorrichtung bis zu dem Anlagering. Der Anlagering stellt insbesondere bei einer Ausgestaltung des Halteteils als Gewindestange zusätzlich eine Anlagefläche für den zu befestigenden Gegenstand dar, so dass beim Aufschrauben einer Befestigungsmutter der Gegenstand gegen den Anlagering gedrückt wird und der Befestigungsanker nicht weiter belastet wird, insbesondere keine Zugkraft auf diesem ausgeübt wird, wenn beispielsweise der Gegenstand an der Wandung anliegt. Dadurch ist der Gegenstand mit einer definierten Anzugskraft der Befestigungsmutter ohne Gefahr einer möglichen Beschädigung der Befestigungsvorrichtung montierbar.

In weiterer Ausgestaltung der Erfindung weist der Bolzen zumindest im Bereich des umgebenden Mantels eine strukturierte Oberfläche auf. Diese strukturierte Oberfläche kann grundsätzlich beliebig, beispielsweise gewindeartig, ausgebildet sein. Die strukturierte Oberfläche stellt sicher, dass der auf den Bolzen spritzgegossene oder extrudierte Mantel eine feste Verbindung mit dem Bolzen des Befestigungsankers eingeht.

In weiterer Ausgestaltung der Erfindung ist der Werkstoff des Befestigungsankers ein Metall. Das Metall kann beispielsweise Gusseisen sein. Um eine Korrosion zu verhindern, ist bevorzugt ein nicht rostendes Metall als Werkstoff ausgewählt. Bei Verwendung von Gusseisen kann er Befestigungsanker insbesondere bei einer Ausgestaltung des Halteteils als Öse ohne weitere Nacharbeit gegossen werden.

In Weiterbildung der Erfindung ist die tellerförmige Anlage an das Folienteil angespritzt. Dies ist die bevorzugte Ausgestaltung, die besonders einfach und wirtschaftlich zu fertigen ist. Während des Herstellungsvorgangs werden der Befestigungsanker und das Folienteil in eine geeignete Form eingelegt und dann wird der Mantel um den Bolzen spritzgegossen oder extrudiert und gleichzeitig während des Spritzgießvorgangs oder Extrusionsvorgangs die tellerförmige Anlage an das Folienteil angespritzt. Alternativ ist es aber auch möglich, dass das Folienteil an der Anlage nachträglich angeklebt wird. An dem Folienteil kann die Dichtfolie, die bevorzugt eine elastische, aus einem Kunststoffwerkstoff hergestellte Dichtfolie ist, befestigt, vorzugsweise festgeklebt werden. Die erfindungsgemäß ausgestaltete Befestigungsvorrichtung gewährleistet nach der vollständigen Montage, dass die Dichtfolie ohne eine Durchdringung im Bereich der Befestigungsvorrichtung die Wandung verkleidet. Dadurch ist eine vollkommen dichte (beispielsweise gegenüber Wasser) Verkleidung der Wandung sichergestellt.

In weiterer Ausgestaltung der Erfindung weist der Mantel zumindest über eine Teillänge eine strukturierte Außenfläche auf. Diese strukturierte Außenfläche ermöglicht eine nachfolgend erläuterte sichere Befestigung in der Bohrung. Als Bohrung ist im Übrigen im Rahmen der Erfindung eine beliebig in die Wand eingelassene Öffnung zu verstehen. Dabei kann die Oberfläche der Öffnung eine Rauigkeit aufweisen.

In Weiterbildung der Erfindung ist die Befestigungseinrichtung mit dem Bolzen und dem umgebenden Mantel in eine Bohrung in der Wandung eingesetzt und vor oder während des Einsetzvorgangs wird ein Kleber in die Bohrung eingebracht. Der Kleber verteilt sich während des Einsetzvorgangs zwischen dem Mantel und der Wandung und härtet nach dem Einsetzvorgang aus. Im Ergebnis ist eine feste Verbindung zwischen dem Mantel der Befestigungseinrichtung und der Bohrung in der Wandung, die beispielsweise aus Gestein besteht, herstellt.

In weiterer Ausgestaltung der Erfindung ist auf dem Mantel im Bereich benachbart zu der tellerförmigen Anlage eine Klemmeinrichtung angeordnet. Diese Klemmeinrichtung gewährleistet, dass beispielsweise bei einer Überkopfmontage der Befestigungseinrichtung diese während des Aushärtevorgangs des Klebers sicher in der Bohrung gehalten ist. Die Klemmeinrichtung kann aus einem Kunststoffwerkstoff oder einem metallischen Werkstoff, unter Anderem aus einem Federstahl gefertigt sein.

Der Mantel und die tellerförmige Anlage sind - wie ausgeführt - aus einem Kunststoffwerkstoff spritzgegossen oder extrudiert, wobei der Kunststoffwerkstoff bevorzugt aus der gleichen Werkstoff-Familie wie das Folienteil (und auch die Dichtfolie) stammt. Das Folienteil und die Dichtfolie können beispielsweise aus Polyethylen (PE) und/oder Polyvinylchlorid (PVC) hergestellt sein. Als Kunststoffwerkstoff für den Mantel und die tellerförmige Anlage bietet sich beispielsweise Polyamid (PA) oder Polyurethan (PU) an. Gegebenenfalls ist es auch möglich, verschiedene Werkstoffe miteinander kombinieren.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig.1: eine Schnittdarstellung einer in eine Bohrung einer Wanderung eingesetzten Befestigungsvorrichtung in einer ersten Ausführungsform,
- Fig.2: eine Schnittdarstellung einer in eine Bohrung einer Wanderung eingesetzten Befestigungsvorrichtung in einer zweiten Ausführungsform und
- Fig.3: eine Schnittdarstellung einer in eine Bohrung einer Wanderung eingesetzten Befestigungsvorrichtung in einer dritten Ausführungsform.

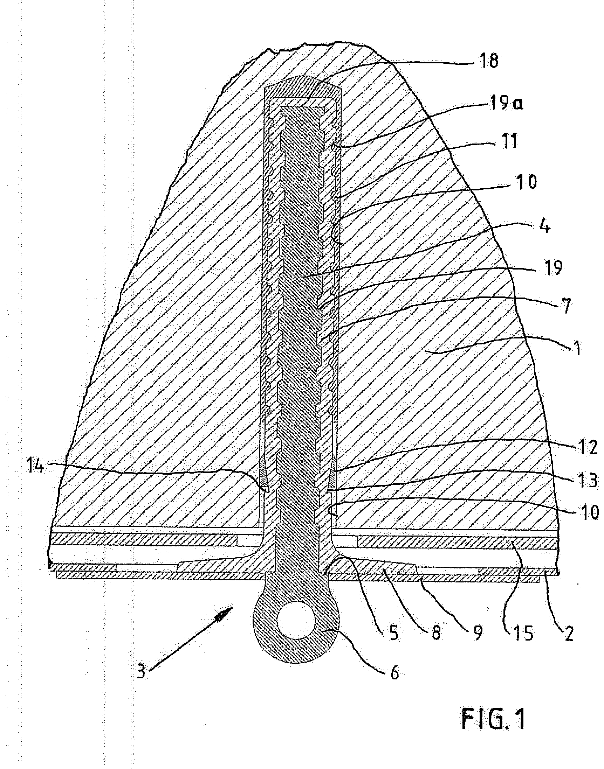

Figur 1 zeigt eine Wandung 1, die beispielsweise ein in einen Berg eingearbeiteter Tunnel ist. Die Wandung 1 kann aber grundsätzlich jede beliebige Wandung im Ingenieurbau, Tiefbau und/oder Wasserbau sein.

Die Wandung 1 insbesondere des Tunnels wird vorzugsweise aber von einem Gestein des Berges oder einer Betonschicht gebildet, die nach der Einarbeitung des Tunnels in das Gestein des Berges auf das Gestein aufgebracht, beispielsweise aufgespritzt worden ist. Die Betonschicht verfestigt das Gestein und gleicht scharfkantige Unebenheiten in dem Tunnel aus. Die Wandung 1 wird nach deren Fertigstellung mit einer Dichtfolie 2 ausgekleidet, indem die Dichtfolie 2 an der von dem Gestein oder der Betonschicht gebildeten Wandung 1 beispielsweise mittels an der Wandung 1 befestigten Rondellen festgelegt wird. Die Dichtfolie 2 besteht aus miteinander verbundenen, beispielsweise verklebten, Folienbahnen, die eine zuverlässige Abdichtung des Tunnels gegenüber in dem Berg vorhandenen Wassers sicherstellen. Um eine Beschädigung der Dichtfolie 2 durch das gegebenenfalls scharfkantige Gestein der Wandung 1 zu verhindern, wird zwischen der Dichtfolie 2 und dem Gestein eine Trennschicht 15 aus einem Geotextil oder einem sonstigen Vlies angebracht. Die Trennschicht 15 kann zusammen mit der Dichtfolie 2 mittels der genannten Rondellen an der Wandung 1 befestigt werden.

Um an der Wandung 1 beliebige Gegenstände, wie beispielsweise eine Eisenarmierung, Rohre, Elektroinstallationen oder Träger zu befestigen, ist die erfindungsgemäße Befestigungsvorrichtung vorgesehen. Die Eisenarmierung wird vor dem Einfahren von einem Schalelemente tragenden Schalwagen in dem Tunnel moniert, wobei der dann gebildete eisenbewährte Schalraum mit Beton ausgefüllt wird. Nach dem Entfernen der Schalelemente ist die soweit fertige Tunnelröhre in dem Berg gebildet.

Die Befestigungsvorrichtung weist einen erfindungsgemäß ausgestalteten Befestigungsanker 3 auf. Der Befestigungsanker 3 ist von einem Bolzen 4, einem Anlagering 5 und einem Halteteil gebildet. In dem Ausführungsbeispiel gemäß Figur 1 ist das Halteteil eine Öse 6, die gleichzeitig durch einen Absatz den Anlagering 5 bildet. Der Befestigungsanker 3 mit den genannten Bestandteilen ist aus einem metallischen Werkstoff hergestellt, beispielsweise als Gußteil in einer Gießform gegossen. Der Bolzen 4 des Befestigungsankers 3 weist eine strukturierte Oberfläche 19 auf, auf die gegebenenfalls unter Zwischenfügung eines Primers ein aus einem Kunststoffwerkstoff bestehender Mantel 7 von dem wandseitigen beziehungsweise bohrungsseitigen Ende 18 des Bolzens 4 bis angrenzend an den Anlagering 5 spritzgegossen oder extrudiert wird. Im Bereich des Anlagerings 5 wird während des Spritzgießvorgangs oder Extrusionsvorgangs eine tellerförmige Anlage 8 ausgebildet, die bevorzugt an einem Folienteil 9 angespritzt wird. Dadurch wird ohne einen weiteren Bearbeitungsschritt eine feste Verbindung der tellerförmigen Anlage 8 mit dem Folienteil 9 hergestellt. An dem Folienteil 9 wird nach der erfolgten Montage der Befestigungsvorrichtung an der Wandung 1 die Dichtfolie 2 befestigt, insbesondere festgeklebt.

Zur Befestigung der Befestigungsvorrichtung an der Wandung 1 wird eine Bohrung 10 in die Wandung 1 eingearbeitet, beispielsweise gebohrt und in die Bohrung 10 eine definierte Menge Kleber 11 eingebracht. Danach wird die vorbereitete Befestigungsvorrichtung mit dem von dem Mantel 7 umgebenen Bolzen 4 in die Bohrung 10 eingetrieben wobei sich der Kleber 11 entlang der Bohrung 10 den Mantel 7 umgebend verteilt. Zur Herstellung einer festen Verbindung zwischen dem Mantel 7 und der Bohrung 10 weist der Mantel 7 ebenfalls eine strukturierte Oberfläche 19a auf, die der des Bolzens 4 entspricht oder ähnlich dazu ausgebildet ist. Vor der Montage der Befestigungsvorrichtung kann in die Dichtfolie 2 und die Trennschicht 15 eine Öffnung eingearbeitet werden, durch die die Bohrung 10 in die Wandung 1 eingearbeitet wird und der Befestigungsanker 3 mit dem Mantel 7 sowie der Kleber 11 in die Bohrung 10 eingebracht wird. Die Öffnung kann aber auch zusammen mit der Bohrung 10 in die Dichtfolie 2 und die Trennschicht 15 eingearbeitet werden.

Da der Kleber in der Regel eine Zeitspanne benötigt, um auszuhärten, ist eine Klemmeinrichtung 12, die beispielsweise aus einem konischen Ring besteht, vorgesehen. Die Klemmeinrichtung 12 verkeilt sich insbesondere bei einer Ausrückbewegung der Befestigungsvorrichtung aus der Bohrung 10 zwischen der Bohrung 10 und dem Mantel 7, so dass ein Herausgleiten der Befestigungsvorrichtung während des Aushärtevorgangs insbesondere bei einer überkopfmontierten Befestigungsvorrichtung ausgeschlossen ist. Damit die Befestigungsvorrichtung mit der Klemmeinrichtung problemlos in die Bohrung eingesetzt werden kann, ist in den Mantel 7 eine trapezförmige Ausnehmung 13 mit einer Anlagekante 14 eingelassen. Die trapezförmige Ausnehmung 13 mit der Anlagekante 14 kann während des Spritzgießens oder Extrudierens ausgebildet werden.

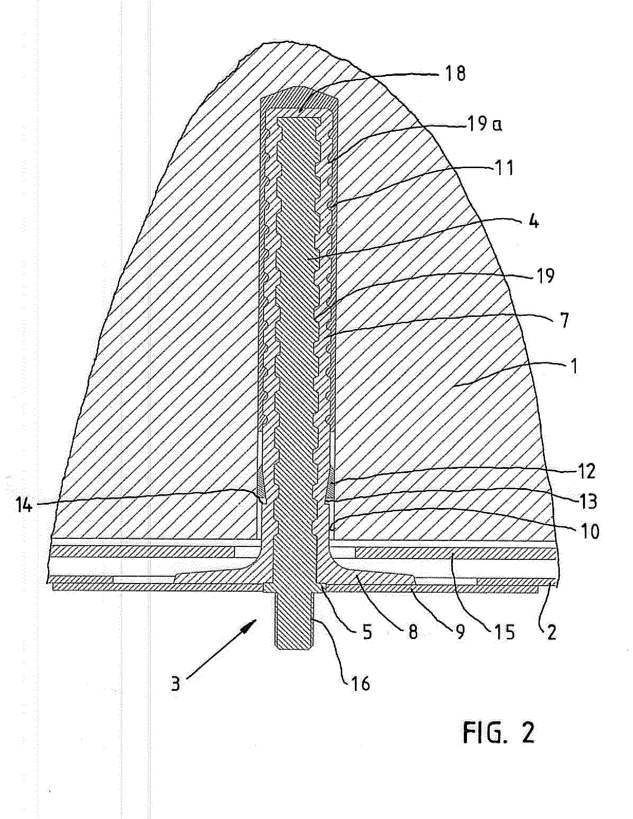

Das Ausführungsbeispiel gemäß Figur 2 unterscheidet sich von dem der Figur 1 dadurch, dass das Halteteil eine Gewindestange 16 ist. Der Anlagering 5 stellt insbesondere bei dieser Ausgestaltung eine Anlagefläche für den zu befestigenden Gegenstand dar, so dass beim Aufschrauben einer Befestigungsmutter auf die Gewindestange 16 der Gegenstand gegen den Anlagering 5 gedrückt wird und der Befestigungsanker 3 nicht weiter belastet wird, insbesondere keine Zugkraft auf diesen ausgeübt wird. Dies wäre der Fall, wenn der Gegenstand an der Wandung 1 beziehungsweise der Dichtfolie 2 anliegen würde. Somit ist der Gegenstand mit einer definierten Anzugskraft der Befestigungsmutter ohne Gefahr einer möglichen Beschädigung der Befestigungsvorrichtung montierbar.

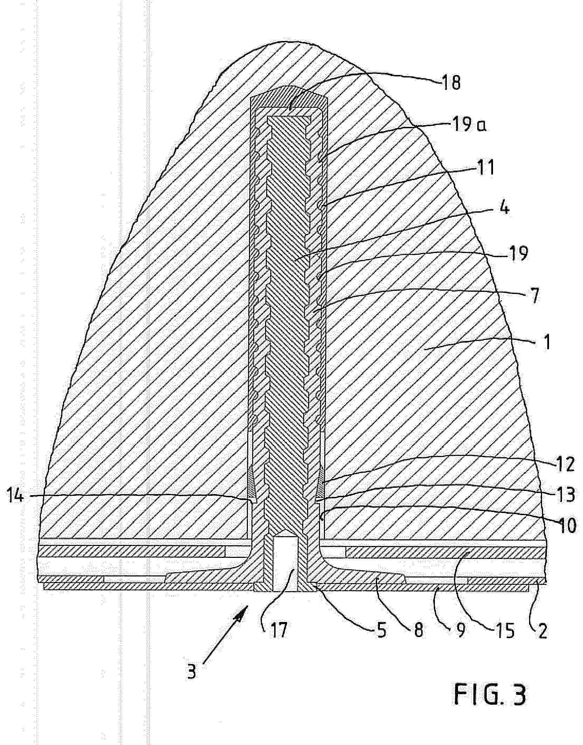

Bei dem Ausführungsbeispiel gemäß Figur 3 ist das Halteteil eine Buchse 17. In die Buchse 17 kann ein Gewinde eingeschnitten oder beispielsweise ein Gewindeeinsatz eingesetzt, beispielsweise eingepresst werden. In das Gewinde ist dann eine Befestigungsschraube zur Montage des Gegenstandes einschraubbar.

### Bezugszeichenliste:

- 1: Wandung
- 2: Dichtfolie
- 3: Befestigungsanker
- 4: Bolzen
- 5: Anlagering
- 6: Öse
- 7: Mantel
- 8: tellerförmige Anlage
- 9: Folienteil
- 10: Bohrung
- 11: Kleber
- 12: Klemmeinrichtung
- 13: trapezförmige Ausnehmung
- 14: Anlagekante
- 15: Trennschicht
- 16: Gewindestange
- 17: Buchse
- 18: Ende
- 19, 19a: strukturierte Oberfläche

## Patentansprüche

1. Befestigungsvorrichtung zur Verankerung eines Gegenstandes an einer festen Wandung (1) im Ingenieur-, Tief-, Wasser- und Tunnelbau, aufweisend einen in einer Bohrung (10) in der Wandung (1) befestigten Befestigungsanker (3), wobei zwischen dem zu verankernden Gegenstand und der Wandung (1) eine durchgehende Dichtfolie (2) angeordnet ist, die mit einem mit der Befestigungsvorrichtung verbundenen Folienteil (9) verbindbar ist, **dadurch gekennzeichnet, dass** der Befestigungsanker (3) ausgehend von einem wandseitigen Ende (18) zumindest über eine Teillänge des Befestigungsankers (3) einen Mantel (7) aus einem während der Herstellung auf den Befestigungsanker (3) spritzgegossenen Kunststoffwerkstoff aufweist, dass der Mantel (7) gegenüberliegend zu dem wandseitigen Ende (18) eine tellerförmige Anlage (8) aufweist und dass der Befestigungsanker (3) einen Bolzen (4), einen Anlagering (5) und ein Halteteil aufweist.

2. Befestigungsvorrichtung nach Anspruche 1,
**dadurch gekennzeichnet, dass** das Halteteil eine Gewindestange (16) ist.

3. Befestigungsvorrichtung nach Anspruch 1,
**dadurch gekennzeichnet, dass** das Halteteil eine Buchse (17) ist.

4. Befestigungsvorrichtung nach Anspruch 1,
**dadurch gekennzeichnet, dass** das Halteteil eine ringförmige Öse (6) ist.

5. Befestigungsvorrichtung nach einem der Ansprüche 1 bis 4,
**dadurch gekennzeichnet, dass** der Mantel (7) mit der tellerförmigen Anlage (8) sich bis zu dem Anlagering (5) erstreckt.

6. Befestigungsvorrichtung nach einen der Ansprüche 1 bis 5,
**dadurch gekennzeichnet, dass** der Bolzen (4) im Bereich des umgebenden Mantels (7) eine strukturierte Oberfläche (19) aufweist.

7. Befestigungsvorrichtung nach einem der vorherigen Ansprüche,
**dadurch gekennzeichnet, dass** das der Werkstoff des Befestigungsankers (3) ein Metall ist.

8. Befestigungsvorrichtung nach einem der vorherigen Ansprüche,
**dadurch gekennzeichnet, dass** die tellerförmige Anlage (8) an das Folienteil (9) angespritzt ist.

9. Befestigungsvorrichtung nach einem der Ansprüche 1 bis 7,
**dadurch gekennzeichnet, dass** das Folienteil (9) an der tellerförmigen Anlage (8) angeklebt ist.

10. Befestigungsvorrichtung nach einem der vorherigen Ansprüche,
**dadurch gekennzeichnet, dass** das auf dem Mantel (7) in dem Bereich benachbart zu der tellerförmigen Anlage (8) eine Klemmeinrichtung (12) angeordnet ist.

11. Befestigungsvorrichtung nach einem der vorherigen Ansprüche,
**dadurch gekennzeichnet, dass** die Befestigungseinrichtung mit dem Bolzen (3) und dem umgebenden Mantel (7) in die Bohrung (10) in der Wandung (1) eingesetzt ist, und dass zwischen der Bohrung (10) und dem Mantel (7) ein Kleber (11) eingebracht ist.

## Claims

1. Fastening device for anchoring an object on a fixed wall (1) in structural engineering, civil engineering, hydraulic engineering and tunnel construction, comprising a fastening anchor (3) which is fastened in a bore (10) in the wall (1), wherein a continuous sealing sheet (2) is arranged between the object to be anchored and the wall (1) and can be connected to a sheet part (9) which is connected to the fastening device, **characterized in that** the fastening anchor (3) comprises, starting from a wall-side end (18), at least over a partial length of the fastening anchor (3), a jacket (7) composed of a plastics material which is injection-moulded onto the fastening anchor (3) during production, **in that** the jacket (7) comprises, opposite to the wall-side end (18), a disc-shaped abutment (8), and **in that** the fastening anchor (3) comprises a bolt (4), a bearing ring (5) and a holding part.

2. Fastening device according to Claim 1,
**characterized in that** the holding part is a threaded rod (16) .

3. Fastening device according to Claim 1,
**characterized in that** the holding part is a socket (17).

4. Fastening device according to Claim 1,
**characterized in that** the holding part is a ring-shaped eye (6).

5. Fastening device according to one of Claims 1 to 4,
**characterized in that** the jacket (7) extends with the disc-shaped abutment (8) up to the bearing ring (5).

6. Fastening device according to one of Claims 1 to 5,
**characterized in that** the bolt (4) comprises, in the region of the surrounding jacket (7) a structured surface (19) .

7. Fastening device according to one of the preceding claims,
**characterized in that** the material of the fastening anchor (3) is a metal.

8. Fastening device according to one of the preceding claims,
**characterized in that** the disc-shaped abutment (8) is injection-moulded onto the sheet part (9).

9. Fastening device according to one of Claims 1 to 7,
**characterized in that** the sheet part (9) is adhesively bonded to the disc-shaped abutment (8).

10. Fastening device according to one of the preceding claims,
**characterized in that** a clamping device (12) is arranged on the jacket (7) in the region adjacent to the disc-shaped abutment (8).

11. Fastening device according to one of the preceding claims,
**characterized in that** the fastening device is inserted with the bolt (3) and the surrounding jacket (7) into the bore (10) in the wall (1), and **in that** an adhesive (11) is introduced between the bore (10) and the jacket (7).

## Revendications

1. Arrangement de fixation destiné à l'ancrage d'un objet à une paroi fixe (1) dans les ouvrages d'art, en génie civil, dans les ouvrages hydrauliques et en construction de tunnels, comprenant un élément d'ancrage de fixation (3) fixé dans un trou (10) dans la paroi (1), un film d'étanchéité (2) d'un seul tenant étant disposé entre l'objet à ancrer et la paroi (1), lequel peut être relié à une partie de film (9) reliée à l'arrangement de fixation, **caractérisé en ce que** l'élément d'ancrage de fixation (3) possède, en partant d'une extrémité côté paroi (18), au moins sur une longueur partielle de l'élément d'ancrage de fixation (3), une enveloppe (7) en une matière plastique moulée par injection sur l'élément d'ancrage de fixation (3) pendant la fabrication, **en ce que** l'enveloppe (7) possède un appui (8) en forme de coupelle à l'opposé de l'extrémité côté paroi (18) et **en ce que** l'élément d'ancrage de fixation (3) possède un goujon (4), une bague d'appui (5) et une partie de maintien.

2. Arrangement de fixation selon la revendication 1, **caractérisé en ce que** la partie de maintien est une tige filetée (16).

3. Arrangement de fixation selon la revendication 1, **caractérisé en ce que** la partie de maintien est une douille (17).

4. Arrangement de fixation selon la revendication 1, **caractérisé en ce que** la partie de maintien est un œillet (6) de forme annulaire.

5. Arrangement de fixation selon l'une des revendications 1 à 4, **caractérisé en ce que** l'enveloppe (7) pourvue de l'appui (8) en forme de coupelle s'étend jusqu'à la bague d'appui (5).

6. Arrangement de fixation selon l'une des revendications 1 à 5, **caractérisé en ce que** le goujon (4) possède une surface structurée (19) dans la zone de l'enveloppe (7) qui l'entoure.

7. Arrangement de fixation selon l'une des revendications précédentes, **caractérisé en ce que** le matériau de l'élément d'ancrage de fixation (3) est un métal.

8. Arrangement de fixation selon l'une des revendications précédentes, **caractérisé en ce que** l'appui (8) en forme de coupelle est surmoulé sur la partie de film (9).

9. Arrangement de fixation selon l'une des revendications 1 à 7, **caractérisé en ce que** la partie de film (9) est collée à l'appui (8) en forme de coupelle.

10. Arrangement de fixation selon l'une des revendications précédentes, **caractérisé en ce qu'**un dispositif de serrage (12) est disposé sur l'enveloppe (7), dans la zone voisine de l'appui (8) en forme de coupelle.

11. Arrangement de fixation selon l'une des revendications précédentes, **caractérisé en ce que** le dispositif de serrage est inséré dans le trou (10) dans la paroi (1) avec le goujon (3) et l'enveloppe (7) qui l'entoure, et **en ce qu'**un adhésif (11) est incorporé entre le trou (10) et l'enveloppe (7).
